# EUROPEAN PATENT SPECIFICATION

(11) **EP 3 836 597 B1**
(45) Date of publication and mention of the grant of the patent: **12.11.2025**
(21) Application number: 19848485.9
(22) Date of filing: 06.08.2019
(51) Int. Cl.: H04W 24/02, H04W 16/10, H04W 52/14, H04W 52/24, H04L 5/00, H04W 92/20

(54) **INTERFERENCE PROCESSING METHOD, APPARATUS AND SYSTEM**
VERFAHREN, VORRICHTUNG UND SYSTEM ZUR INTERFERENZVERARBEITUNG
PROCÉDÉ, APPAREIL ET SYSTÈME DE TRAITEMENT DE BROUILLAGE

(30) Priority: 10.08.2018 CN 201810910862
(43) Date of publication of application: 16.06.2021
(73) Proprietor: VIVO MOBILE COMMUNICATION CO., LTD., Dongguan, Guangdong 523860 (CN)
(72) Inventor: KIMBA DIT ADAMOU, Boubacar, Dongguan, Guangdong 523860 (CN); PAN, Xueming, Dongguan, Guangdong 523860 (CN); SHEN, Xiaodong, Dongguan, Guangdong 523860 (CN)
(74) Representative: Winter, Brandl - Partnerschaft mbB
(86) International application number: PCT/CN2019/099495
(87) International publication number: WO 2020/029970

(56) References cited:
- EP-A1- 2 856 826
- EP-B1- 2 856 826
- CN-A- 101 572 868
- CN-A- 102 065 490
- CN-A- 102 202 353
- CN-A- 102 215 533
- US-A1- 2012 028 584
- US-A1- 2013 155 891
- US-A1- 2013 225 217
- US-A1- 2014 177 485
- ZTE: "Overview of Duplexing and Interference Management", vol. RAN WG1, no. Hangzhou; 20170515 - 20170519, 14 May 2017 (2017-05-14), XP051272418, Retrieved from the Internet <URL:http://www.3gpp.org/ftp/Meetings_3GPP_SYNC/RAN1/Docs/> [retrieved on 20170514]

## Description

### TECHNICAL FIELD

Embodiments of the present invention relate to the field of communications technologies, and in particular, to an interference processing method, an apparatus, and a system.

### RELATED ART

In a communications system, a base station may interact with another device (for example, user equipment, another base station, or a core network device).

Currently, during the interaction between the base station and the another device, if the base station sends a signal to the another device, the another device near the base station may receive the signal sent by the base station. However, if another base station is transmitting data at this time, due to factors such as a weather condition, high transmit power of the base station, and a high antenna position, the another base station may be interfered with by the signal sent by the base station. In this case, there may be interference between base stations.

Document US2014/177485A1 discusses an interference type field is added to an existing interference overload indicator (IOI) information element to differentiate the eNB to eNB interference; for the eNB-to-eNB interference, an interfered eNB can send IOI messages to explicitly indicate the presence of eNB-to-eNB interference to the interfering eNB(s). Document EP2856826A1 discusses in aspects for addressing eNB-to-eNB interference, the aggressor eNB may transmit RNTP to the victim eNB proactively identifying the RBs that are used and also their relative transmit power, upon receiving the RNTP message from the aggressor eNB, the victim eNB may schedule UL traffic on unused or low interference RBs; Moreover, upon receiving OI messages from the victim eNB, the aggressor eNB may reduce DL power of the corresponding RBs. Document US2012/028584A1 discusses if an inter-eNB interface 308, such as an X2 inter- face, is available, the eNBs so coupled may be able to share interference information (as well as other neighboring relationship information);the eNBs may share interference self-coordination information, including inter-ference information, neighboring relationship information; the eNBs may then perform distributed ICIC self-organization and optimization making use of the shared interference information (and/or other neighboring relation-ship information) to make the frequency reuse mode selections. Document US2013/155891A1 discusses the first base station may use information received from at least one wireless device to compute the inter-cell interference from the subset of the plurality of second base stations; the first plurality of beamforming code words may be selected to reduce inter-cell interference to a subset of the plurality of second base stations.

### SUMMARY

Embodiments of the present invention provide an interference processing method, an apparatus, and a system, to resolve a problem of interference between base stations.

To solve the foregoing technical problem, the following technical solutions are used in the embodiments of the present invention:
The scope of the present invention is determined only by the scope of the appended claims. More precisely, in one aspect, the present invention provides an interference processing method is provided, according to claim 1 and further detailed in the dependent claims referring back to this claim. A corresponding target device is provided in claim 14.

In the second aspect, the present invention provides an interference processing method according to claim 9 and further detailed in the dependent claims referring back to this claim. A corresponding base station is provided in claim 15.

In the embodiments of the present invention, the target device may receive the interference information sent by the first base station (the interference information is used to indicate the interference parameter for the interference from the second base station to the first base station), and determine the processing mode of the interference based on the interference parameter. The target device may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

### BRIEF DESCRIPTION OF DRAWINGS

FIG 1 is an architectural diagram 1 of a communications system according to an embodiment of the present invention;
FIG 2 is an architectural diagram 2 of a communications system according to an embodiment of the present invention;
FIG 3 is a schematic diagram 1 of an interference processing method according to an embodiment of the present invention;
FIG 4 is a schematic diagram 2 of an interference processing method according to an embodiment of the present invention;
FIG 5 is a schematic diagram 3 of an interference processing method according to an embodiment of the present invention;
FIG 6 is a schematic diagram 4 of an interference processing method according to an embodiment of the present invention;
FIG 7 is a schematic diagram 5 of an interference processing method according to an embodiment of the present invention;
FIG 8 is a schematic structural diagram 1 of a target device according to an embodiment of the present invention;
FIG 9 is a schematic structural diagram 2 of a target device according to an embodiment of the present invention;
FIG 10 is a schematic structural diagram 3 of a target device according to an embodiment of the present invention;
FIG 11 is a schematic structural diagram 1 of a base station according to an embodiment of the present invention;
FIG 12 is a schematic structural diagram 2 of a base station according to an embodiment of the present invention;
FIG 13 is a schematic structural diagram 3 of a base station according to an embodiment of the present invention;
FIG 14 is a schematic structural diagram 4 of a base station according to an embodiment of the present invention;
FIG 15 is a schematic diagram of hardware of an interference management device according to an embodiment of the present invention; and
FIG. 16 is a schematic diagram of hardware of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts. The protection scope of this application is defined by the appended claims.

In the specification and claims of the embodiments of the present invention, the terms such as "first" and "second" are used to distinguish between different objects, but are not used to describe a particular sequence of the objects. For example, first indication information and second indication information are intended to distinguish between different indication information, but do not describe a particular order of the indication information. In the description of the embodiments of the present invention, unless otherwise specified, the meaning of "a plurality of" means two or more.

The term "and/or" in this specification describes an association relationship of associated objects, indicating that three relationships may exist. For example, A and/or B may indicate three cases: Only A exists, both A and B exist, and only B exists. A character "/" in this specification indicates an "or" relationship between associated objects. For example, A/B indicates A or B.

In the embodiments of the present invention, the term such as "exemplary" or "for example" is used to indicate an example, an instance, or a description. Any embodiment or design solution described as "exemplary" or "for example" in the embodiments of the present invention should not be construed as being more preferred or advantageous than other embodiments or design solutions. To be precise, the use of the term such as "exemplary" or "for example" is intended to present a related concept in a specific manner.

Embodiments of the present invention provide an interference processing method, an apparatus, and a system. A target device may receive interference information sent by a first base station (the interference information is used to indicate an interference parameter for interference from a second base station to the first base station), and determine a processing mode of the interference based on the interference parameter. The target device may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

The interference processing method, the apparatus, and the system provided in the embodiments of the present invention may be applied to a communications system. The interference processing method, the apparatus, and the system may be specifically applied to a process in which the target device determines, based on the communications system, a processing mode of interference generated between two base stations.

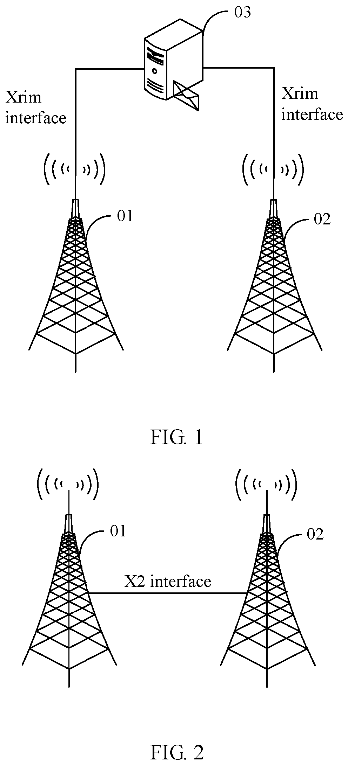

For example, FIG. 1 is a schematic architectural diagram of a communications system according to an embodiment of the present invention. As shown in FIG 1, the communications system may include a first base station 01, a second base station 02, and an interference management device 03.

The first base station 01 may establish a connection and communicate with the interference management device 03, and the second base station 02 may establish a connection and communicate with the interference management device 03.

Optionally, in this embodiment of the present invention, the first base station 01 may be connected to the interference management device 03 through an existing network interface (for example, an X2 interface, an Xn interface, an S1 interface, an NG interface, an F1 interface, an ItfN interface, or an MS interface), or may be connected to the interference management device 03 through a new network interface (for example, an Xrim interface) (the Xrim interface is shown in FIG 1 as an example). The second base station 02 may be connected to the interference management device 03 through an existing network interface (for example, an X2 interface, an Xn interface, an S1 interface, an NG interface, an F1 interface, an ItfN interface, or an MS interface), or may be connected to the interference management device 03 by establishing a new network interface (for example, an Xrim interface) (the Xrim interface is shown in FIG. 1 as an example).

A base station (for example, the first base station 01 and the second base station 02) is an apparatus deployed in a radio access network (Radio Access Network, RAN) to provide a wireless communication function for user equipment (User Equipment, UE). The base station may include various forms of macro base stations, micro base stations, relay stations, access points, and the like. In systems using different wireless access technologies, names of devices having base station functions may be different. For example, in a 3rd generation mobile communications (3G) network, the device is referred to as a NodeB (NodeB); in a long term evolution (Long Term Evolution, LTE) system, the device is referred to as an evolved NodeB (evolved NodeB, eNB or eNodeB); and in a 5th generation mobile communications (5G) network, the device is referred to as a gNB. With evolution of the communications technology, the name of the "base station" may change. The interference management device 03 may be a network management device (for example, OAM, that is, operation (Operation), administration (Administration), and maintenance (Maintenance)), or a third-party node (for example, a remote interference management coordination device (Remote Interfere Management Coordinator, RIMC)). The interference management device 03 is configured to coordinate processing on interference between the first base station 01 and the second base station 02. It should be noted that if the first base station 01 and the second base station 02 belong to different network management devices (OAM), interference related information (for example, interference information and interference indication information) between the first base station 01 and the second base station 02 may be exchanged between the OAMs of the two base stations.

Optionally, the RIMC may be deployed at a different location from the OAM, or may be deployed at a same location as the OAM.

For example, FIG 2 is a schematic architectural diagram of another communications system according to an embodiment of the present invention. As shown in FIG 2, the communications system may include a first base station 01 and a second base station 02. The first base station 01 and the second base station 02 may establish a connection and communicate with each other.

Optionally, in this embodiment of the present invention, the first base station 01 may be connected to the second base station 02 by establishing an X2 interface, an Xn interface, or the like (the X2 interface is shown in FIG 1 as an example).

With reference to the accompanying drawings, the following describes in detail, based on specific embodiments and application scenarios of the embodiments, an interference processing method, an apparatus, and a system provided in the embodiments of the present invention.

It should be noted that the following separately describes in detail the interference processing methods provided in the embodiments of the present invention by using two specific embodiments (Embodiment 1 and Embodiment 2).

Embodiments of the present invention provide an interference processing method. Interaction (Embodiment 1) among a first base station, a second base station, and an interference management device (a target device is the interference management device), and interaction (Embodiment 2) between the first base station and the second base station (the target device is the second base station) are used as an example below to describe the interference processing method provided in the embodiments of the present invention.

### Embodiment 1

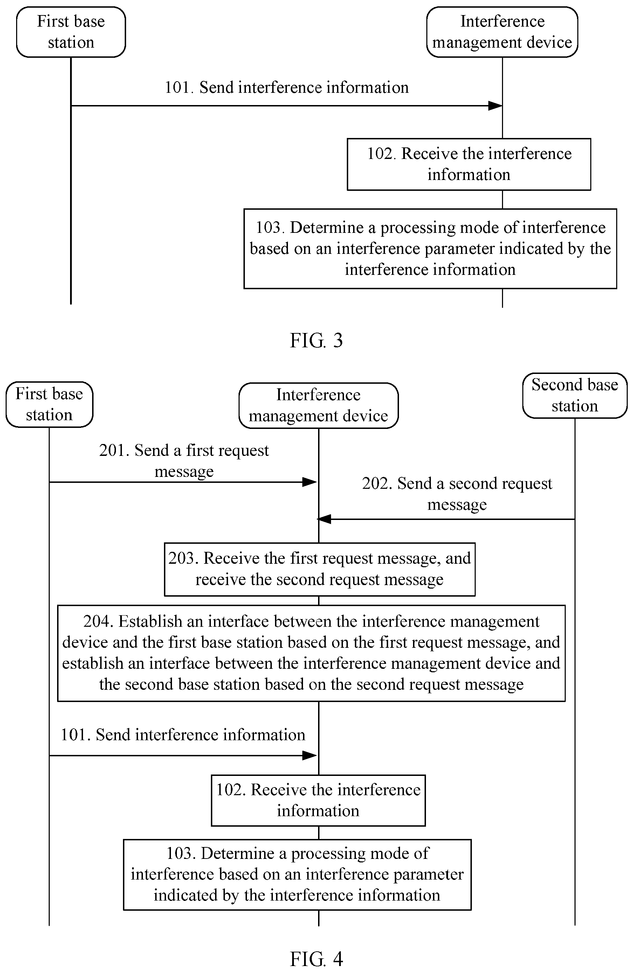

Based on the communications system shown in FIG 1, an embodiment of the present invention provides an interference processing method. As shown in FIG. 3, the interference processing method may include the following steps 101 to 103. Step 101: A first base station sends interference information to an interference management device.

In this embodiment of the present invention, the interference information is used to indicate an interference parameter for interference from a second base station to the first base station.

Optionally, in this embodiment of the present invention, a distance between the first base station and the second base station may be relatively far. For example, the distance between the first base station and the second base station is greater than a threshold.

Optionally, in this embodiment of the present invention, the first base station and the second base station may belong to different manufacturers or a same manufacturer.

It may be understood that, in this embodiment of the present invention, when the first base station is interfered with by the second base station, the first base station may send the interference information to the interference management device.

Optionally, in this embodiment of the present invention, the first base station may determine, by measuring signal strength, whether the first base station is interfered with.

Optionally, in this embodiment of the present invention, the interference parameter may include at least one of measured signal strength, interference frequency, an interference type, and the like.

It should be noted that interference between base stations may be classified into co-site interference and co-existing interference. In the co-site interference, two base stations share a same site, are close, and have lower isolation. In the co-existing interference, two base stations do not share a same site, are far away from each other, and have greater isolation.

Optionally, in this embodiment of the present invention, with reference to FIG. 3, as shown in FIG 4, before step 101, the interference processing method provided in this embodiment of the present invention may further include the following steps 201 to 204. Step 201: The first base station sends a first request message to the interference management device. It should be noted that, in this embodiment of the present invention, the first request message corresponds to a first target request message. In this embodiment of the present invention, the first request message is used to request to establish an interface between the first base station and the interference management device.

Step 202: The second base station sends a second request message to the interference management device.

In this embodiment of the present invention, the second request message is used to request to establish an interface between the second base station and the interference management device.

It should be noted that a sequence of step 201 and step 202 is not limited in this embodiment of the present invention. That is, step 201 may be performed before step 202, or step 202 may be performed before step 201, or step 201 and step 202 may be simultaneously performed.

Step 203: The interference management device receives the first request message sent by the first base station, and receives the second request message sent by the second base station.

It should be noted that, in this embodiment of the present invention, the interference management device may first receive the first request message sent by the first base station, and then receive the second request message sent by the second base station; or the interference management device may first receive the second request message sent by the second base station, and then receive the first request message sent by the first base station; or the interference management device may simultaneously receive the first request message sent by the first base station and the second request message sent by the second base station.

Step 204: The interference management device establishes the interface between the interference management device and the first base station based on the first request message, and establishes the interface between the interference management device and the second base station based on the second request message.

It may be understood that, in this embodiment of the present invention, after the interface between the interference management device and the first base station is established, and the interface between the interference management device and the second base station is established, interference related information may be exchanged between the first base station and the interference management device, and interference related information may be exchanged between the second base station and the interference management device.

It should be noted that for the interface between the interference management device and the first base station established by the interference management device, and the interface between the interference management device and the second base station, refer to the descriptions of the foregoing embodiment. Details are not described herein again.

Step 102: The interference management device receives the interference information.

Step 103: The interference management device determines a processing mode of the interference based on the interference parameter indicated by the interference information.

In this embodiment of the present invention, the interference management device may determine the processing mode of the interference based on the interference parameter after determining that the first base station is interfered with by the second base station.

Optionally, in this embodiment of the present invention, the processing mode may include at least one of the following first mode and second mode. The first mode is: the interference management device sends second indication information to the first base station, where the second indication information is used to instruct the first base station to perform at least one of the following: adjusting at least one of information about an access channel, adjusting a sending resource of the first base station, and adjusting/lowering a level of a modulation and coding scheme (Modulation and Coding Scheme, MCS). The second mode is: the interference management device sends third indication information to the second base station, where the second indication information is used to indicate at least one of the following: the second base station reduces transmit power of the second base station, the second base station performs downlink backoff, the second base station increases the transmit power after reducing the transmit power for first duration, and the second base station cancels downlink backoff after performing downlink backoff for second duration.

Optionally, in this embodiment of the present invention, the first duration and the second duration may be the same or different.

Optionally, in this embodiment of the present invention, the information about the access channel may include at least one of information about a random access channel (Random Access Channel, RACH) and information about a newly defined uplink channel having a similar function to the RACH.

Optionally, in this embodiment of the present invention, the information about the newly defined uplink channel having the similar function to the RACH may include sequence information, and the sequence information may include at least one of index (index) information of a sequence, a time domain resource of the sequence, and a frequency domain resource of the sequence.

Optionally, in this embodiment of the present invention, the sending resource of the first base station may include a time domain resource and/or a frequency domain resource of the first base station.

An embodiment of the present invention provides an interference processing method. An interference management device may receive interference information sent by a first base station (the interference information is used to indicate an interference parameter for interference from a second base station to the first base station), and determine a processing mode of the interference based on the interference parameter. The interference management device may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

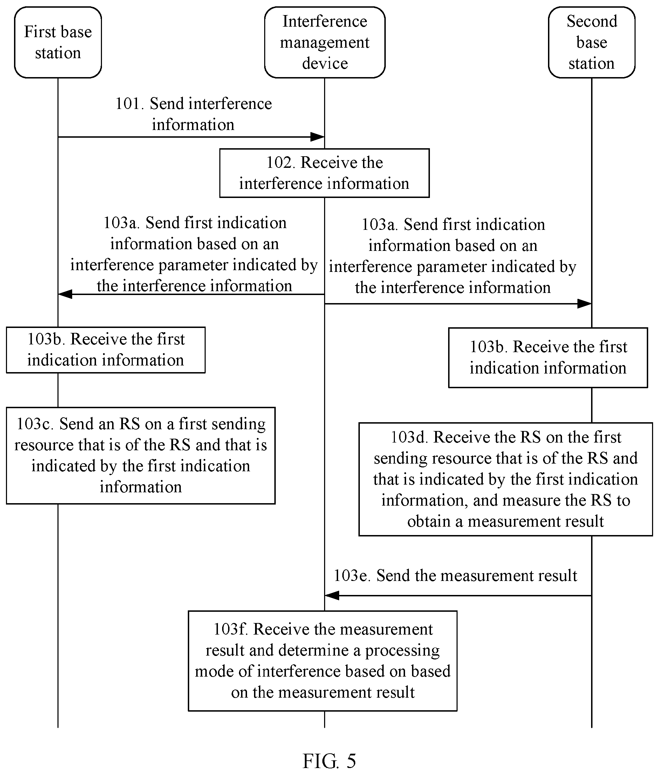

Optionally, in this embodiment of the present invention, with reference to FIG. 3, as shown in FIG 5, step 103 may be specifically implemented by using the following steps 103a to 103f.

Step 103a: The interference management device sends first indication information to the first base station and the second base station based on the interference parameter indicated by the interference information.

In this embodiment of the present invention, the first indication information is used to indicate a first parameter of a reference signal (Reference Signal, RS), and the first parameter includes a first sending resource of the RS.

It should be noted that, in this embodiment of the present invention, the first indication information corresponds to first target indication information.

It may be understood that, in this embodiment of the present invention, the interference management device may enable an RIM function based on the interference parameter indicated by the interference information, and send the first indication information to the first base station to instruct the first base station to send the first parameter of the RS to the first base station, and send the first indication information to the second base station to instruct the second base station to receive the first parameter of the RS.

Optionally, in this embodiment of the present invention, the first sending resource of the RS may include at least one of a time domain resource of the RS (or a sequence location of the RS) and a frequency domain resource of the RS.

Step 103b: The first base station receives the first indication information, and the second base station receives the first indication information.

Step 103c: The first base station sends the RS on the first sending resource that is of the RS and that is indicated by the first indication information.

Step 103d: The second base station receives, on the first sending resource that is of the RS and that is indicated by the first indication information, the RS sent by the first base station, and measures the RS to obtain a measurement result.

In this embodiment of the present invention, the measurement result is a result of measuring the RS sent by the first base station on the first sending resource by the second base station.

Optionally, in this embodiment of the present invention, when measuring an RS, the second base station may measure at least one of a signal length, signal strength, signal quality, and the like of the RS to obtain a measurement result.

Step 103e: The second base station sends the measurement result to the interference management device.

Step 103f: The interference management device receives the measurement result, and determines the processing mode of the interference based on the measurement result.

In this embodiment of the present invention, the interference management device may determine the processing mode of the interference based on the measurement result after determining that the first base station is interfered with by the second base station.

In this embodiment of the present invention, the second base station may measure, based on the first indication information sent by the interference management device (the first indication information is used to indicate the first parameter of the RS, and the first parameter includes the first sending resource of the RS), the RS sent by the first base station on the first sending resource, to obtain the measurement result. The interference management device may determine the processing mode of the interference based on the measurement result sent by the second base station, to process the interference from the second base station to the first base station. Therefore, the interference from the second base station to the first base station can be reduced, thereby improving performance of signal transmission between the first base station and the second base station.

Optionally, in this embodiment of the present invention, after step 103, the interference processing method provided in this embodiment of the present invention may further include the following steps 301 to 303.

Step 301: The interference management device processes the interference in the processing mode of the interference.

Optionally, in this embodiment of the present invention, the interference management device may send second indication information to the first base station, to instruct the first base station to perform at least one of the following: switching/adjusting information about an RACH, switching a sending resource of the first base station, and switching/lowering a level of an MCS; and/or the interference management device may send third indication information to the second base station, to instruct the second base station to reduce transmit power of the second base station or instruct the second base station to perform downlink backoff.

Step 302: If a degree of the interference from the second base station to the first base station is less than or equal to a first threshold, the first base station sends feedback information to the interference management device.

In this embodiment of the present invention, the feedback information is used to indicate that the degree of the interference from the second base station to the first base station is less than or equal to the first threshold.

It should be noted that, in this embodiment of the present invention, the first threshold corresponds to the second target threshold. Optionally, in this embodiment of the present invention, the first base station may periodically measure signal strength/measure signal strength in a real-time manner to determine whether the degree of the interference from the second base station to the first base station is less than or equal to the first threshold.

Optionally, in this embodiment of the present invention, the degree of interference from the second base station to the first base station is determined by at least one of the following: a result of measuring an RS sent by the first base station by the second base station, and the feedback information sent by the first base station. Step 303: The interference management device receives the feedback information sent by the first base station.

In this embodiment of the present invention, when the degree of the interference from the second base station to the first base station is less than or equal to the first threshold, the first base station may send the feedback information to the interference management device, to feed back, to the interference management device, that the interference from the second base station to the first base station is reduced.

Optionally, in this embodiment of the present invention, after step 103, the interference processing method provided in this embodiment of the present invention may further include the following steps 401 to 403.

Step 401: The interference management device processes the interference in the processing mode of the interference.

Step 402: If the interference management device determines that the degree of the interference from the second base station to the first base station is less than or equal to the first threshold, the interference management device sends fourth indication information to the first base station.

In this embodiment of the present invention, the fourth indication information is used to instruct the first base station to stop sending an RS.

It should be noted that, in this embodiment of the present invention, the fourth indication information corresponds to second target indication information.

Step 403: The first base station receives the fourth indication information sent by the interference management device, and stops sending an RS according to an instruction of the fourth indication information.

Optionally, in this embodiment of the present invention, if the interference management device determines that the degree of the interference from the second base station to the first base station is less than or equal to the first threshold, the interference management device may disable the RIM function.

In this embodiment of the present invention, if the interference management device determines that the degree of the interference from the second base station to the first base station is less than or equal to the first threshold, the interference management device may send the fourth indication information to the first base station to instruct the first base station to stop sending the RS, so that the first base station can stop sending the RS if the degree of the interference from the second base station to the first base station is less than or equal to the first threshold, thereby reducing power consumption of the first base station.

Optionally, in this embodiment of the present invention, after step 103, the interference processing method provided in this embodiment of the present invention may further include the following steps 501 to 503.

Step 501: The interference management device processes the interference in the processing mode of the interference.

Step 502: If the interference management device determines that the degree of the interference from the second base station to the first base station is less than or equal to the first threshold, the interference management device sends fifth indication information to the first base station and the second base station.

In this embodiment of the present invention, the fifth indication information is used to indicate a second parameter of an RS, and the second parameter includes a second sending resource of the RS.

It should be noted that, in this embodiment of the present invention, the fifth indication information corresponds to third target indication information.

It should be noted that for descriptions of the second parameter, refer to the specific descriptions of the first parameter in the foregoing embodiment. Details are not described herein again.

Step 503: The first base station receives the fifth indication information sent by the interference management device, and the second base station receives the fifth indication information sent by the interference management device.

It should be noted that, in this embodiment of the present invention, after step 503, the following may be further performed: The first base station sends the RS on the second sending resource that is of the RS and that is indicated by the fifth indication information; the second base station receives, on the second sending resource that is of the RS and that is indicated by the fifth indication information, the RS sent by the first base station, and measures the RS to obtain a measurement result; the second base station sends the measurement result to the interference management device; and the interference management device receives the measurement result, and determines the processing mode based on the measurement result.

In this embodiment of the present invention, if the interference management device determines that the degree of the interference from the second base station to the first base station is less than or equal to the first threshold, the interference management device may send the fifth indication information to the first base station and the second base station to indicate the second parameter of the RS (the second parameter includes the second sending resource of the RS), so that the second base station can measure the RS sent by the first base station on the second sending resource, to obtain the measurement result, and the interference management device can determine the processing mode of the interference based on the measurement result sent by the second base station, to process the interference from the second base station to the first base station. Therefore, interference from the second base station to the first base station can be more accurately and effectively reduced, thereby further improving performance of signal transmission between the first base station and the second base station.

It should be noted that in this embodiment of the present invention, if the interference management device determines that the degree of the interference from the second base station to the first base station is greater than the first threshold, step 101 to step 103 in Embodiment 1 and other steps are cyclically performed.

### Embodiment 2

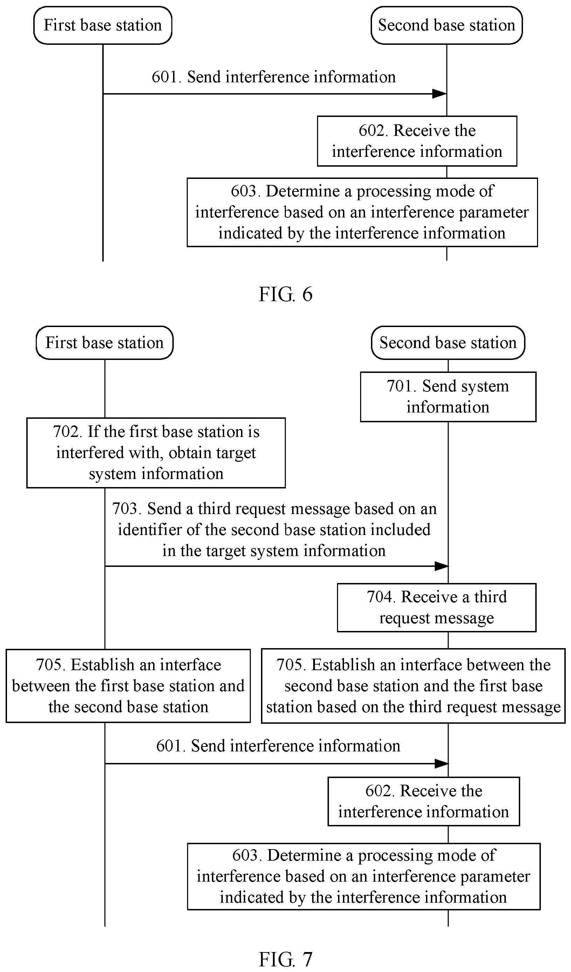

Based on the communications system shown in FIG 2, an embodiment of the present invention provides an interference processing method. As shown in FIG. 6, the interference processing method may include the following steps 601 to 603.

Step 601: A first base station sends interference information to a second base station.

In this embodiment of the present invention, the interference information is used to indicate an interference parameter for interference from the second base station to the first base station.

It should be noted that for descriptions of step 601, refer to the specific descriptions of step 101 in the foregoing embodiment. Details are not described herein again.

Optionally, in this embodiment of the present invention, with reference to FIG. 6, as shown in FIG 7, before step 601, the interference processing method provided in this embodiment of the present invention may further include the following steps 701 to 705.

Step 701: The second base station sends system information.

In this embodiment of the present invention, the system information is used to indicate an identifier of the second base station, the identifier of the second base station is used by the first base station to send a third request message to the second base station, and the third request message is used to request to establish an interface between the first base station and the second base station.

It may be understood that, in this embodiment of the present invention, the second base station sends the system information in a broadcast form.

Optionally, in this embodiment of the present invention, the identifier of the second base station may be an identifier of a cell that provides a service for the second base station, for example, a Cell global identifier (Cell Global Identifier, CGI), a tracking area code (Tracking Area Code, TAC), or a public land mobile network (Public Land Mobile Network, PLMN).

Step 702: If the first base station is interfered with, the first base station obtains target system information.

In this embodiment of the present invention, signal strength of the target system information is greater than or equal to a first target threshold, and the target system information includes the identifier of the second base station.

In this embodiment of the present invention, if the first base station is interfered with, the first base station measures signal strength of system information sent by a plurality of base stations (the plurality of base stations include the second base station), and determines system information of the second base station as the target system information if signal strength of the system information of the second base station is greater than or equal to the first target threshold.

It may be understood that, in this embodiment of the present invention, the interference from the second base station to the first base station may be determined if the signal strength of the system information of the second base station is greater than or equal to the first target threshold.

Step 703: The first base station sends a third request message to the second base station based on an identifier of the second base station included in the target system information.

It should be noted that, in this embodiment of the present invention, the third request message corresponds to a second target request message.

Step 704: The second base station receives the third request message.

Step 705: The first base station establishes an interface between the first base station and the second base station, and the second base station establishes an interface between the second base station and the first base station based on the third request message.

It may be understood that, in this embodiment of the present invention, after the interface between the first base station and the second base station is established, the first base station and the second base station may exchange interference related information. For example, the first base station may send the interference information to the second base station.

It should be noted that for the interface between the first base station and the second base station established by the first base station, and the interface between the second base station and the first base station established by the second base station, refer to the descriptions of the foregoing embodiment. Details are not described herein again.

Step 602: The second base station receives the interference information.

Step 603: The second base station determines a processing mode of the interference based on the interference parameter indicated by the interference information.

Optionally, in this embodiment of the present invention, the processing mode may include at least one of the following: the second base station reduces transmit power of the second base station, the second base station performs downlink backoff, the second base station increases the transmit power after reducing the transmit power for third duration, and the second base station cancels downlink backoff after performing downlink backoff for fourth duration.

Optionally, in this embodiment of the present invention, the third duration and the fourth duration may be the same or different.

It may be understood that, in this embodiment of the present invention, the second base station may start a timer, and after the third duration, increase the transmit power of the second base station from transmit power 2 to transmit power 3 starting from a moment at which the transmit power of the second base station (transmit power 1) is reduced to the transmit power 2. The transmit power 3 is greater than the transmit power 2. It should be noted that the transmit power 3 may be less than the transmit power 1, or may be equal to the transmit power 1, or may be greater than the transmit power 1.

An embodiment of the present invention provides an interference processing method. A second base station may receive interference information sent by a first base station (the interference information is used to indicate an interference parameter for interference from the second base station to the first base station), and determine a processing mode of the interference based on the interference parameter. The second base station may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

Optionally, in this embodiment of the present invention, after step 603, the interference processing method provided in this embodiment of the present invention may further include the following steps 801 to 803.

Step 801: The second base station processes the interference in the processing mode of the interference.

Optionally, in this embodiment of the present invention, the second base station may reduce transmit power of the second base station, perform downlink backoff, increase the transmit power after reducing the transmit power for third duration, and/or cancel downlink backoff after performing downlink backoff for fourth duration.

Step 802: If a degree of the interference from the second base station to the first base station is less than or equal to a second target threshold, the first base station releases the interface between the first base station and the second base station.

It should be noted that, in this embodiment of the present invention, for descriptions of the degree of the interference from the second base station to the first base station, refer to the specific descriptions of the foregoing embodiment. Details are not described herein again.

Step 803: If the second base station fails, within fifth duration, to receive the interference information sent by the first base station, the second base station releases the interface between the second base station and the first base station after the fifth duration.

It may be understood that, in this embodiment of the present invention, after the second base station increases the transmit power after reducing the transmit power for the third duration, and/or the second base station cancels downlink backoff after performing downlink backoff for the fourth duration, if the interference information sent by the first base station is not received within the fifth duration, the interface between the second base station and the first base station is released after the fifth duration.

It should be noted that, in this embodiment of the present invention, if the second base station receives, within the fifth duration, the interference information sent by the first base station, the second base station cyclically performs steps 601 to 603 in Embodiment 2 and other steps.

In this embodiment of the present invention, if the degree of the interference from the second base station to the first base station is less than or equal to the second target threshold, the first base station may release the interface between the first base station and the second base station. Therefore, a memory of the first base station can be released and storage space of the first base station can be saved. If the second base station fails, within the fifth duration, to receive the interference information sent by the first base station, the second base station releases the interface between the second base station and the first base station after the fifth duration. Therefore, a memory of the second base station can be released and storage space of the second base station can be saved.

Optionally, in this embodiment of the present invention, after step 603, the interference processing method provided in this embodiment of the present invention may further include the following steps 901 to 903.

Step 901: The second base station processes the interference in the processing mode of the interference.

Step 902: If a degree of the interference from the second base station to the first base station is less than or equal to a first threshold, the first base station sends feedback information to the second base station.

In this embodiment of the present invention, the feedback information is used to indicate that the degree of the interference from the second base station to the first base station is less than or equal to the first threshold.

It should be noted that, in this embodiment of the present invention, the first threshold corresponds to the second target threshold.

Optionally, in this embodiment of the present invention, the degree of interference from the second base station to the first base station is determined by at least one of the following: a result of measuring an RS sent by the first base station by the second base station, and the feedback information sent by the first base station.

Step 903: The second base station receives the feedback information sent by the first base station.

It should be noted that in this embodiment of the present invention, for descriptions of step 902 and step 903, refer to the specific descriptions of step 302 and step 303 in the foregoing embodiment. Details are not described herein again.

In this embodiment of the present invention, when the degree of the interference from the second base station to the first base station is less than or equal to the first threshold, the first base station may send the feedback information to the second base station, to feed back, to the second base station, that the interference from the second base station to the first base station is reduced.

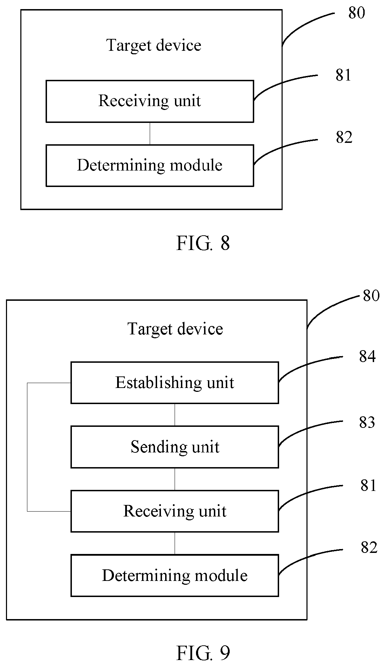

FIG. 8 is a possible schematic structural diagram of a target device according to an embodiment of the present invention. The target device may be the second base station or the interference management device in the foregoing embodiment. As shown in FIG. 8, a target device 80 provided in this embodiment of the present invention may include a receiving unit 81 and a determining unit 82.

The receiving unit 81 is configured to receive interference information sent by a first base station, where the interference information is used to indicate an interference parameter for interference from the second base station to the first base station. The determining unit 82 is configured to determine a processing mode of the interference based on the interference parameter indicated by the interference information received by the receiving unit 81.

In a possible implementation, the target device is the interference management device. The determining unit 82 is specifically configured to: send first indication information to the first base station and the second base station based on the interference parameter, where the first indication information is used to indicate a first parameter of an RS, and the first parameter includes a first sending resource of the RS; receive a measurement result sent by the second base station, where the measurement result is a result of measuring the RS sent by the first base station on the first sending resource by the second base station; and determine the processing mode based on the measurement result.

In a possible implementation, the processing mode may include at least one of a first mode and a second mode. The first mode may be: the interference management device sends second indication information to the first base station, where the second indication information is used to instruct the first base station to adjust at least one of information about an access channel, a sending resource of the first base station, and a level of an MCS. The second mode may be: the interference management device sends third indication information to the second base station, where the third indication information is used to indicate at least one of the following: the second base station reduces transmit power of the second base station, the second base station performs downlink backoff, the second base station increases the transmit power after reducing the transmit power for first duration, and the second base station cancels downlink backoff after performing downlink backoff for second duration.

In a possible implementation, the receiving unit 81 is further configured to: before receiving the interference information sent by the first base station, receive a first request message sent by the first base station, and receive a second request message sent by the second base station, where the first request message is used to request to establish an interface between the first base station and the interference management device, and the second request message is used to request to establish an interface between the second base station and the interference management device. The target device 80 provided in this embodiment of the present invention may further include an establishing unit. The establishing unit is configured to: establish the interface between the interference management device and the first base station based on the first request message received by the receiving unit 81, and establish the interface between the interference management device and the second base station based on the second request message received by the receiving unit 81.

In a possible implementation, the target device is the second base station. The processing mode may include at least one of the following: the second base station reduces transmit power of the second base station, the second base station performs downlink backoff, the second base station increases the transmit power after reducing the transmit power for third duration, and the second base station cancels downlink backoff after performing downlink backoff for fourth duration.

In a possible implementation, with reference to FIG. 8, as shown in FIG 9, the target device 80 provided in this embodiment of the present invention may further include a sending unit 83 and an establishing unit 84. The sending unit 83 is configured to send system information before the receiving unit 81 receives the interference information sent by the first base station, where the system information is used to indicate an identifier of the second base station, the identifier of the second base station is used by the first base station to send a third request message to the second base station, and the third request message is used to request to establish an interface between the first base station and the second base station. The receiving unit 81 is further configured to receive the third request message sent by the first base station. The establishing unit 84 is configured to establish the interface between the second base station and the first base station based on the third request message received by the receiving unit 81.

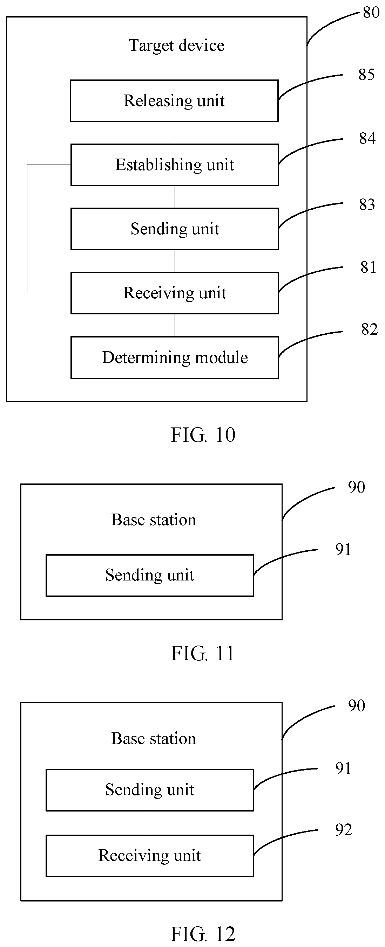

In a possible implementation, with reference to FIG 9, as shown in FIG 10, the target device 80 provided in this embodiment of the present invention may further include a releasing unit 85. The releasing unit 85 is configured to: after the second base station processes the interference in the processing mode, if the second base station fails, within fifth duration, to receive the interference information sent by the first base station, release, after the fifth duration, the interface between the second base station and the first base station that is established by the establishing unit 84.

In a possible implementation, the receiving unit 81 is further configured to: after the target device processes the interference in the processing mode, receive feedback information sent by the first base station, where the feedback information is used to indicate that a degree of the interference from the second base station to the first base station is less than or equal to a first threshold.

In a possible implementation, the target device 80 provided in this embodiment of the present invention may further include a sending unit. The sending unit is further configured to: if the target device determines that the degree of the interference from the second base station to the first base station is less than or equal to the first threshold, send fourth indication information to the first base station, where the fourth indication information is used to instruct the first base station to stop sending an RS; or if the target device determines that the degree of the interference from the second base station to the first base station is less than or equal to the first threshold, send fifth indication information to the first base station and the second base station, where the fifth indication information is used to indicate a second parameter of an RS, and the second parameter includes a second sending resource of the RS.

In a possible implementation, the degree of interference from the second base station to the first base station is determined by at least one of the following: a result of measuring an RS sent by the first base station by the second base station, and the feedback information sent by the first base station.

The target device provided in this embodiment of the present invention can implement the processes implemented by the target device in the foregoing method embodiments. To avoid repetition, details are not described herein again.

An embodiment of the present invention provides a target device. The target device may receive interference information sent by a first base station (the interference information is used to indicate an interference parameter for interference from a second base station to the first base station), and determine a processing mode of the interference based on the interference parameter. The target device may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

FIG. 11 is a possible schematic structural diagram of a base station according to an embodiment of the present invention. The base station may be the first base station in the foregoing embodiment. As shown in FIG 11, a base station 90 provided in this embodiment of the present invention includes a sending unit 91.

The sending unit 91 is configured to send interference information to a target device, where the interference information is used to indicate an interference parameter for interference from a second base station to the first base station, and the target device is the second base station or an interference management device.

In a possible implementation, the target device is the interference management device. With reference to FIG. 11, as shown in FIG. 12, the base station 90 provided in this embodiment of the present invention may further include a receiving unit 92. The receiving unit 92 is configured to: after the sending unit 91 sends the interference information to the target device, receive first target indication information sent by the interference management device, where the first target indication information is used to indicate a first parameter of an RS, and the first parameter includes a first sending resource of the RS. The sending unit 91 is further configured to send the RS on the first sending resource indicated by the first target indication information received by the receiving unit 92.

In a possible implementation, the sending unit 91 is further configured to: before sending the interference information to the target device, send a first target request message to the interference management device, where the first target request message is used to request to establish an interface between the first base station and the interference management device.

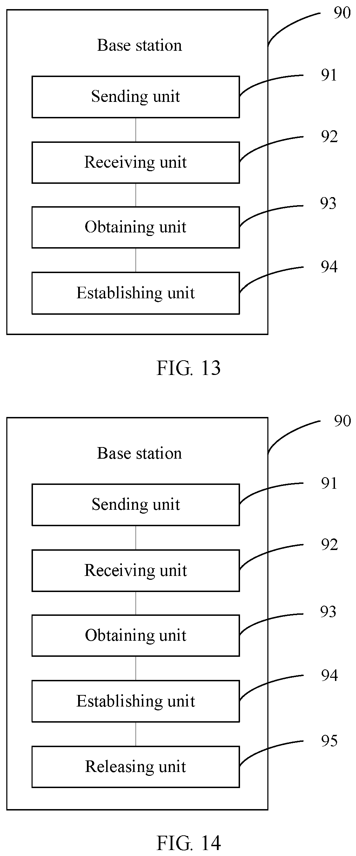

In a possible implementation, the target device is the second base station. With reference to FIG. 11, as shown in FIG. 13, the base station 90 provided in this embodiment of the present invention may further include an obtaining unit 93 and an establishing unit 94. The obtaining unit 93 is configured to: before the sending unit 91 sends the interference information to the target device, if the first base station is interfered with, obtain target system information, where signal strength of the target system information is greater than or equal to a first target threshold, and the target system information includes an identifier of the second base station. The sending unit 91 is further configured to send a second target request message to the second base station based on the identifier of the second base station included in the target system information obtained by the obtaining unit 93, where the second target request message is used to request to establish an interface between the first base station and the second base station. The establishing unit 94 is configured to establish the interface between the first base station and the second base station.

In a possible implementation, with reference to FIG 13, as shown in FIG 14, the base station 90 provided in this embodiment of the present invention may further include a releasing unit 95. The releasing unit 95 is configured to: if a degree of the interference from the second base station to the first base station is less than or equal to a second target threshold, release the interface between the first base station and the second base station established by the establishing unit 94.

In a possible implementation, the sending unit 91 is further configured to: if a degree of the interference from the second base station to the first base station is less than or equal to a second target threshold, send feedback information to the target device, where the feedback information is used to indicate that the degree of the interference from the second base station to the first base station is less than or equal to the second target threshold.

In a possible implementation, with reference to FIG 11, as shown in FIG. 12, the base station 90 provided in this embodiment of the present invention further includes a receiving unit 92. The receiving unit 92 is configured to: if the degree of the interference from the second base station to the first base station is less than or equal to the second target threshold, receive second target indication information sent by the target device, where the second target indication information is used to instruct the first base station to stop sending an RS; or if the degree of the interference from the second base station to the first base station is less than or equal to the second target threshold, receive third target indication information sent by the target device, where the third target indication information is used to indicate a second parameter of an RS, and the second parameter includes a second sending resource of the RS.

The base station provided in this embodiment of the present invention can implement the processes implemented by the first base station in the foregoing method embodiments. To avoid repetition, details are not described herein again.

An embodiment of the present invention provides a base station. A first base station may send interference information to a second base station (the interference information is used to indicate an interference parameter for interference from a second base station to the first base station), so that the second base station can determine a processing mode of the interference based on the interference parameter indicated by the interference information sent by the first base station. The second base station may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

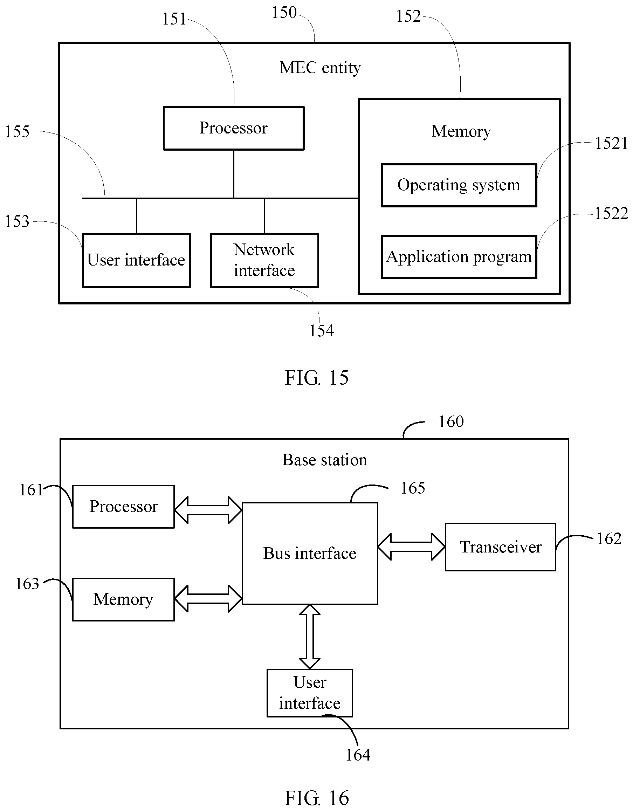

FIG 15 is a schematic diagram of hardware of an interference management device according to an embodiment of the present invention. As shown in FIG. 15, the interference management device 150 includes but is not limited to at least one processor 151, a memory 152, a user interface 153, and at least one network interface 154. All components of the interference management device 150 are coupled together by using a bus system 155.

It should be noted that, a person skilled in the art may understand that a structure of the interference management device shown in FIG 15 does not constitute a limitation on the interference management device, and the interference management device may include more or fewer parts than those shown in FIG 15, or combine some parts, or have different part arrangements.

The network interface 154 is configured to receive interference information sent by a first base station, where the interference information is used to indicate an interference parameter for interference from a second base station to the first base station. The processor 151 is configured to determine a processing mode of the interference based on the interference parameter indicated by the interference information received by the network interface 154.

An embodiment of the present invention provides an interference management device. The interference management device may receive interference information sent by a first base station (the interference information is used to indicate an interference parameter for interference from a second base station to the first base station), and determine a processing mode of the interference based on the interference parameter. The interference management device may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

It may be understood that the bus system 155 is configured to implement a connection and communication between these components. In addition to a data bus, the bus system 155 may include a power bus, a control bus, and a status signal bus. However, for clarity of description, various buses are marked as the bus system 155 in FIG. 15.

The user interface 153 may include a display, a keyboard, a clicking device (for example, a mouse, a trackball, a touch panel, or a touchscreen), or the like.

It may be understood that the memory 152 in this embodiment of the present invention may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 152 described in this embodiment of the present invention is intended to include but not limited to these memories and any memory of another proper type.

In some implementations, the memory 152 stores the following element: an executable module or a data structure, a subset thereof, or an extended set thereof: an operating system 1521 and an application program 1522.

The operating system 1521 includes various system programs, for example, a framework layer, a kernel library layer, and a driver layer, and is configured to implement various basic services and process hardware-based tasks. The application program 1522 includes various application programs, for example, a media player, and a browser, and is configured to implement various application services. A program for implementing the method in this embodiment of the present invention may be included in the application program 1522.

In this embodiment of the present invention, the interference management device 150 may further include a computer program that is stored in the memory 152 and that may run on the processor 151. When the computer program is executed by the processor 151, steps of the method provided in the embodiments of the present invention are implemented.

The method disclosed in the foregoing embodiment of the present invention may be applied to the processor 151, or implemented by the processor 151. The processor 151 may be an integrated circuit chip having a signal processing capability. During implementation, the steps of the foregoing method can be completed by hardware integrated logic circuits in the processor 151 or instructions in the form of software. The processor 151 may be a general purpose processor, a digital signal processor (Digital Signal Processor, DSP), an application-specific integrated circuit (Application Specific Integrated Circuit, ASIC), a field programmable gate array (Field Programmable Gate Array, FPGA), another programmable logic device, a discrete gate, a transistor logic device, or a discrete hardware component. The processor may implement or perform the methods, the steps, and logical block diagrams that are disclosed in the embodiments of the present invention. The general-purpose processor may be a microprocessor or may be any conventional processor or the like. Steps of the methods disclosed with reference to the embodiments of the present invention may be directly executed and accomplished through a hardware decoding processor, or may be executed and accomplished by using a combination of hardware and software modules in the decoding processor. The software module may be located in a mature computer-readable storage medium in this field such as a random access memory, a flash memory, a read-only memory, a programmable read-only memory or an electrically erasable programmable memory, or a register. The computer-readable storage medium is located in the memory 152, and the processor 151 reads information from the memory 152 and completes the steps of the foregoing method in combination with its hardware. Specifically, the computer readable storage medium stores a computer program. When the computer program is executed by the processor 151, steps of the method provided in the embodiments of the present invention are implemented.

It may be understood that the embodiments described in the embodiments of the present invention may be implemented by hardware, software, firmware, middleware, microcode, or a combination thereof. For hardware implementation, a processing unit may be implemented in one or more ASICs, DSPs, digital signal processing devices (DSP Device, DSPD), programmable logic devices (Programmable Logic Device, PLD), FPGAs, general purpose processors, controllers, microcontrollers, microprocessors, other electronic units configured to perform the functions in the present invention, or a combination thereof.

For software implementation, the technology described in the embodiments of the present invention may be implemented by using a module (for example, a process or a function) that performs the function in the embodiments of the present invention. Software codes can be stored in the memory and executed by the processor. The memory can be implemented inside or outside the processor.

Optionally, an embodiment of the present invention further provide an interference management device, including at least one processor 151 shown in FIG 15, a memory 152, and a computer program that is stored in the memory 152 and that can run on the processor 151. When the computer program is executed by the processor 151, processes of the foregoing method embodiment are implemented, and a same technical effect can be achieved. To avoid repetition, details are not described herein again.

FIG 16 is a schematic diagram of hardware of a base station according to an embodiment of the present invention. The base station may be the first base station or the second base station in the foregoing embodiment. As shown in FIG. 16, a base station 160 includes at least one processor 161, a transceiver 162, a memory 163, a user interface 164, and a bus interface 165.

When the base station shown in FIG. 16 is the first base station, the transceiver 162 is configured to send interference information to a target device, where the interference information is used to indicate an interference parameter for interference from a second base station to the first base station, and the target device is the second base station or an interference management device.

An embodiment of the present invention provides a base station, and the base station is a first base station. The first base station may send interference information to a second base station (the interference information is used to indicate an interference parameter for interference from a second base station to the first base station), so that the second base station can determine a processing mode of the interference based on the interference parameter indicated by the interference information sent by the first base station. The second base station may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

When the base station shown in FIG 16 is the second base station, the transceiver 162 is configured to receive interference information sent by a first base station, where the interference information is used to indicate an interference parameter for interference from the second base station to the first base station. The processor 161 is configured to determine a processing mode of the interference based on the interference parameter indicated by the interference information received by the transceiver 162.

An embodiment of the present invention provides a base station, and the base station is a second base station. The second base station may receive interference information sent by a first base station (the interference information is used to indicate an interference parameter for interference from the second base station to the first base station), and determine a processing mode of the interference based on the interference parameter. The second base station may determine the processing mode of the interference based on the interference parameter for the interference from the second base station to the first base station, to process the interference from the second base station to the first base station. Therefore, the interference from the second base station to the first base station can be reduced, thereby improving performance of signal transmission between the first base station and the second base station.

The processor 161 may be responsible for managing a bus architecture and general processing, and the processor 161 may be configured to read and execute a program in the memory 163 to implement function processing and control on the base station 160. The memory 163 may store data used by the processor 161 when the processor 161 performs an operation. The processor 161 and the memory 163 may be integrated together or disposed separately.

In this embodiment of the present invention, the base station 160 may further include: a computer program stored in the memory 163 and executable on the processor 161, where the computer program, when executed by the processor 161, implements the steps of the methods provided in the embodiments of the present invention.

In FIG. 16, a bus architecture may include any quantity of interconnected buses and bridges, which are specifically connected together by one or more processors represented by the processor 161 and various circuits of a memory represented by the memory 163. The bus architecture may further link various other circuits such as a peripheral device, a voltage regulator, and a power management circuit. These are well known in the art, and therefore are not further described in the embodiments of the present invention. The bus interface provides an interface. The transceiver 162 may include a plurality of elements, that is, include a transmitter and a receiver, and provide units for communication with various other apparatuses on a transmission medium. The user interface 164 may be alternatively an interface that can be externally or internally connected to a required device, and the connected device includes but is not limited to a keypad, a display, a loudspeaker, a microphone, and a joystick.

Optionally, an embodiment of the present invention further provides a base station, including at least one processor 161 shown in FIG 16, a memory 162, and a computer program that is stored in the memory 162 and that may run on the processor 161. When the computer program is executed by the processor 161, processes of the foregoing method embodiment are implemented, and a same technical effect can be achieved. To avoid repetition, details are not described herein again.

An embodiment of the present invention further provides a computer readable storage medium. The computer readable storage medium stores a computer program. When the computer program is executed by the processor 151 shown in FIG 15 or the processor 161 shown in FIG 16, processes of the foregoing method embodiment are implemented, and a same technical effect can be achieved. To avoid repetition, details are not described herein again. The computer readable storage medium includes a ROM, a RAM, a magnetic disk, an optical disc, or the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "including a..." does not exclude another same element in a process, method, article, or apparatus that includes the element.

According to the foregoing descriptions of the implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementations. The foregoing specific implementations are merely schematic instead of restrictive. Under enlightenment of this application, a person of ordinary skills in the art may make many forms. The protection scope of the invention is defined by the appended claims.

## Claims

1. An interference processing method, the method compring:
receiving (102), by a target device, interference information sent by a first base station, wherein the interference information is used to indicate an interference parameter for interference from a second base station to the first base station, and the target device is the second base station or an interference management device; and
determining (103), by the target device, a processing mode of the interference based on the interference parameter;
**characterized in that**,
if the target device determines that a degree of the interference from the second base station to the first base station is less than or equal to a first threshold, sending (402), by the target device, fourth indication information to the first base station, wherein the fourth indication information is used to instruct the first base station to stop sending a reference signal, RS; or
if the target device determines that a degree of the interference from the second base station to the first base station is less than or equal to a first threshold, sending (502), by the target device, fifth indication information to the first base station and the second base station, wherein the fifth indication information is used to indicate a second parameter of reference signal, RS, and the second parameter comprises a second sending resource of the RS.

2. The method according to claim 1, wherein the target device is the interference management device; and
the determining (103), by the target device, a processing mode of the interference based on the interference parameter comprises:
sending (103a), by the interference management device, first indication information to the first base station and the second base station based on the interference parameter, wherein the first indication information is used to indicate a first parameter of a reference signal, RS, and the first parameter comprises a first sending resource of the RS;
receiving (103f), by the interference management device, a measurement result sent by the second base station, wherein the measurement result is a result of measuring the RS sent by the first base station on the first sending resource by the second base station; and
determining (103f), by the interference management device, the processing mode based on the measurement result.

3. The method according to claim 2, wherein the processing mode comprises at least one of a first mode and a second mode;
the first mode is: the interference management device sends second indication information to the first base station, wherein the second indication information is used to instruct the first base station to adjust at least one of information about an access channel, a sending resource of the first base station, and a level of a modulation and coding scheme, MCS; and
the second mode is: the interference management device sends third indication information to the second base station, wherein the third indication information is used to indicate at least one of the following: the second base station reduces transmit power of the second base station, the second base station performs downlink backoff, the second base station increases the transmit power after reducing the transmit power for first duration, and the second base station cancels downlink backoff after performing downlink backoff for second duration.

4. The method according to claim 2 or 3, wherein before the receiving (102), by a target device, interference information sent by a first base station, the method further comprises:
receiving (203), by the interference management device, a first request message sent by the first base station, and receiving a second request message sent by the second base station, wherein the first request message is used to request to establish an interface between the first base station and the interference management device, and the second request message is used to request to establish an interface between the second base station and the interference management device; and
establishing (204), by the interference management device, the interface between the interference management device and the first base station based on the first request message, and establishing the interface between the interference management device and the second base station based on the second request message.

5. The method according to claim 1, wherein the target device is the second base station; and the processing mode comprises at least one of the following: the second base station reduces transmit power of the second base station, the second base station performs downlink backoff, the second base station increases the transmit power after reducing the transmit power for third duration, and the second base station cancels downlink backoff after performing downlink backoff for fourth duration.

6. The method according to claim 5, wherein before the receiving (102), by a target device, interference information sent by a first base station, the method further comprises:
sending (701), by the second base station, system information, wherein the system information is used to indicate an identifier of the second base station, the identifier of the second base station is used by the first base station to send a third request message to the second base station, and the third request message is used to request to establish an interface between the first base station and the second base station; receiving (704), by the second base station, the third request message sent by the first base station; and establishing (705), by the second base station, the interface between the second base station and the first base station based on the third request message; and
wherein the method further comprises:
after the second base station processes the interference in the processing mode, if the second base station fails, within fifth duration, to receive the interference information sent by the first base station, releasing, by the second base station, the interface between the second base station and the first base station after the fifth duration.

7. The method according to claim 1, wherein the method further comprises:
after the target device processes the interference in the processing mode, receiving (303), by the target device, feedback information sent by the first base station, wherein the feedback information is used to indicate a degree of the interference from the second base station to the first base station is less than or equal to a first threshold.

8. The method according to claim 1, wherein the degree of the interference from the second base station to the first base station is determined by at least one of the following:
a result of measuring an RS sent by the first base station by the second base station, and the feedback information sent by the first base station.

9. An interference processing method, the method comprising:
sending (101), by a first base station, interference information to a target device, wherein the interference information is used to indicate an interference parameter for interference from a second base station to the first base station, and the target device is the second base station or an interference management device;
**characterized in that**,
if a degree of the interference from the second base station to the first base station is less than or equal to a second target threshold, receiving, by the first base station, second target indication information sent by the target device, wherein the second target indication information is used to instruct the first base station to stop sending a reference signal, RS;
or
if a degree of the interference from the second base station to the first base station is less than or equal to a second target threshold, receiving, by the first base station, third target indication information sent by the target device, wherein the third target indication information is used to indicate a second parameter of a reference signal, RS, and the second parameter comprises a second sending resource of the RS.

10. The method according to claim 9, wherein the target device is the interference management device; and
after the sending (101), by a first base station, interference information to a target device, the method further comprises: receiving (103b), by the first base station, first target indication information sent by the interference management device, wherein the first target indication information is used to indicate a first parameter of a reference signal, RS, and the first parameter comprises a first sending resource of the RS; and sending (103c), by the first base station, the RS on the first sending resource.

11. The method according to claim 10, wherein before the sending (101), by a first base station, interference information to a target device, the method further comprises:
sending (201), by the first base station, a first target request message to the interference management device, wherein the first target request message is used to request to establish an interface between the first base station and the interference management device.

12. The method according to claim 9, wherein the target device is the second base station; and
before the sending (101), by a first base station, interference information to a target device, the method further comprises:
if the first base station is interfered with, obtaining (702), by the first base station, target system information, wherein signal strength of the target system information is greater than or equal to a first target threshold, and the target system information comprises an identifier of the second base station;
sending (703), by the first base station, a second target request message to the second base station based on the identifier of the second base station, wherein the second target request message is used to request to establish an interface between the first base station and the second base station; and
establishing (705), by the first base station, the interface between the first base station and the second base station, and
wherein the method further comprises:
if the degree of the interference from the second base station to the first base station is less than or equal to thesecond target threshold, releasing (802), by the first base station, the interface between the first base station and the second base station.

13. The method according to claim 9, wherein the method further comprises:
if the degree of the interference from the second base station to the first base station is less than or equal to the second target threshold, sending, by the first base station, feedback information to the target device, wherein the feedback information is used to indicate that the degree of the interference from the second base station to the first base station is less than or equal to the second target threshold

14. A target device, wherein the target device is a second base station or an interference management device, and the target device comprises a receiving unit (81) and a determining unit (82);
the receiving unit (81) is configured to receive interference information sent by a first base station, wherein the interference information is used to indicate an interference parameter for interference from the second base station to the first base station; and
the determining unit (82) is configured to determine a processing mode of the interference based on the interference parameter indicated by the interference information received by the receiving unit;
**characterized in that**,
the target device further comprises a sending unit (83), wherein
the sending unit (83) is configured to:
if the target device determines that a degree of the interference from the second base station to the first base station is less than or equal to a first threshold, send (402), by the target device, fourth indication information to the first base station, wherein the fourth indication information is used to instruct the first base station to stop sending a reference signal, RS; or
if the target device determines that a degree of the interference from the second base station to the first base station is less than or equal to a first threshold, send (502), by the target device, fifth indication information to the first base station and the second base station, wherein the fifth indication information is used to indicate a second parameter of a reference signal, RS, and the second parameter comprises a second sending resource of the RS.

15. A base station, the base station is a first base station, and the base station comprises a sending unit (91), wherein the sending unit (91) is configured to send interference information to a target device, wherein the interference information is used to indicate an interference parameter for interference from a second base station to the first base station, and the target device is the second base station or an interference management device;
**characterized in that**,
the base station further comprises a receiving unit (92) wherein,
the receiving unit (92) is configured to:
if a degree of the interference from the second base station to the first base station is less than or equal to a second target threshold, receive, by the first base station, second target indication information sent by the target device, wherein the second target indication information is used to instruct the first base station to stop sending a reference signal, RS;
or
if the degree of the interference from the second base station to the first base station is less than or equal to the second target threshold, receive, by the first base station, third target indication information sent by the target device, wherein the third target indication information is used to indicate a second parameter of a reference signal, RS, and the second parameter comprises a second sending resource of the RS.

## Patentansprüche

1. Verfahren zur Interferenzverarbeitung, wobei das Verfahren die folgenden Schritte umfasst:
Empfangen (102) von Interferenzinformationen, die von einer ersten Basisstation gesendet werden, durch ein Zielgerät, wobei die Interferenzinformationen verwendet werden, um einen Interferenzparameter für Interferenzen von einer zweiten Basisstation zu der ersten Basisstation anzuzeigen, und das Zielgerät die zweite Basisstation oder ein Interferenzmanagementgerät ist; und
Bestimmen (103) eines Verarbeitungsmodus der Interferenz durch das Zielgerät basierend auf dem Interferenzparameter;
**dadurch gekennzeichnet, dass**
wenn das Zielgerät bestimmt, dass ein Grad der Interferenz von der zweiten Basisstation zur ersten Basisstation kleiner oder gleich einem ersten Schwellenwert ist, Senden (402) von vierten Anzeigeinformationen durch das Zielgerät an die erste Basisstation, wobei die vierten Anzeigeinformationen verwendet werden, um die erste Basisstation anzuweisen, ein Senden eines Referenzsignals, RS, zu beenden; oder
wenn das Zielgerät bestimmt, dass ein Grad der Interferenz von der zweiten Basisstation zur ersten Basisstation kleiner oder gleich einem ersten Schwellenwert ist, Senden (502) von fünften Anzeigeinformationen durch das Zielgerät an die erste Basisstation und die zweite Basisstation, wobei die fünften Anzeigeinformationen verwendet werden, um einen zweiten Parameter eines Referenzsignals, RS, anzuzeigen, und der zweite Parameter eine zweite Sende-Ressource des RS aufweist.

2. Verfahren nach Anspruch 1, wobei das Zielgerät das Interferenzmanagementgerät ist; und
das Bestimmen (103) eines Verarbeitungsmodus der Interferenz durch das basierend auf dem Interferenzparameter die folgenden Schritte umfasst:
Senden (103a) von ersten Anzeigeinformationen durch das Interferenzmanagementgerät an die erste Basisstation und die zweite Basisstation basierend auf dem Interferenzparameter, wobei die ersten Anzeigeinformationen verwendet werden, um einen ersten Parameter eines Referenzsignals, RS, anzuzeigen, und der erste Parameter eine erste Sende-Ressource des RS aufweist;
Empfangen (103f) eines Messergebnisses, das von der zweiten Basisstation gesendet wird, durch das Interferenzmanagementgerät, wobei das Messergebnis ein Ergebnis der Messung des RS ist, das von der ersten Basisstation auf der ersten Sende-Ressource durch die zweite Basisstation gesendet wird; und
Bestimmen (103f) des Verarbeitungsmodus durch das Interferenzmanagementgerät basierend auf dem Messergebnis.

3. Verfahren nach Anspruch 2, wobei der Verarbeitungsmodus einen ersten Modus und/oder einen zweiten Modus aufweist;
der erste Modus ist, dass das Interferenzmanagementgerät zweite Anzeigeinformationen an die erste Basisstation sendet, wobei die zweiten Anzeigeinformationen verwendet werden, um die erste Basisstation anzuweisen, die Informationen über einen Zugangskanal und/oder eine Sende-Ressource der ersten Basisstation und/oder einen Pegel eines Modulations- und Codierungsschemas, MCS, anzupassen; und
der zweite Modus ist, dass das Interferenzmanagementgerät dritte Anzeigeinformationen an die zweite Basisstation sendet, wobei die dritten Anzeigeinformationen verwendet werden, um Folgendes anzuzeigen: die zweite Basisstation eine Sendeleistung der zweiten Basisstation reduziert, und/oder die zweite Basisstation einen Downlink-Backoff durchführt, und/oder die zweite Basisstation die Sendeleistung erhöht, nachdem sie die Sendeleistung für eine erste Dauer reduziert hat, und/oder die zweite Basisstation den Downlink-Backoff aufhebt, nachdem sie den Downlink-Backoff für eine zweite Dauer durchgeführt hat.

4. Verfahren nach Anspruch 2 oder 3, wobei vor dem Empfangen (102) von Interferenzinformationen, die von einer ersten Basisstation gesendet werden, durch ein Zielgerät das Verfahren ferner die folgenden Schritte umfasst:
Empfangen (203) einer ersten Anforderungsnachricht, die von der ersten Basisstation gesendet wird, durch das Interferenzmanagementgerät und Empfangen einer zweiten Anforderungsnachricht, die von der zweiten Basisstation gesendet wird, wobei die erste Anforderungsnachricht verwendet wird, um es anzufordern eine Schnittstelle zwischen der ersten Basisstation und dem Interferenzmanagementgerät einzurichten, und die zweite Anforderungsnachricht verwendet wird, um es anzufordern, eine Schnittstelle zwischen der zweiten Basisstation und dem Interferenzmanagementgerät einzurichten; und
Einrichten (204), durch das Interferenzmanagementgerät, der Schnittstelle zwischen dem Interferenzmanagementgerät und der ersten Basisstation basierend auf der ersten Anforderungsnachricht und der Schnittstelle zwischen dem Interferenzmanagementgerät und der zweiten Basisstation basierend auf der zweiten Anforderungsnachricht.

5. Verfahren nach Anspruch 1, wobei das Zielgerät die zweite Basisstation ist und der Verarbeitungsmodus Folgendes aufweist: die zweite Basisstation eine Sendeleistung der zweiten Basisstation reduziert, und/oder die zweite Basisstation einen Downlink-Backoff durchführt, und/oder die zweite Basisstation die Sendeleistung erhöht, nachdem sie die Sendeleistung für eine dritte Dauer reduziert hat, und/oder die zweite Basisstation den Downlink-Backoff aufhebt, nachdem sie den Downlink-Backoff für eine vierte Dauer durchgeführt hat.

6. Verfahren nach Anspruch 5, wobei vor dem Empfangen (102) von Interferenzinformationen, die von einer ersten Basisstation gesendet werden, durch ein Zielgerät das Verfahren ferner die folgenden Schritte umfasst:
Senden (701) von Systeminformationen durch die zweite Basisstation, wobei die Systeminformationen dazu verwendet werden, eine Kennung der zweiten Basisstation anzuzeigen, wobei die Kennung der zweiten Basisstation von der ersten Basisstation verwendet wird, um eine dritte Anforderungsnachricht an die zweite Basisstation zu senden, und wobei die dritte Anforderungsnachricht dazu verwendet wird, um es anzufordern, eine Schnittstelle zwischen der ersten Basisstation und der zweiten Basisstation einzurichten; Empfangen (704) der dritten Anforderungsnachricht, die von der ersten Basisstation gesendet wird, durch die zweite Basisstation; und Einrichten (705) der Schnittstelle zwischen der zweiten Basisstation und der ersten Basisstation durch die zweite Basisstation basierend auf der dritten Anforderungsnachricht; und
wobei das Verfahren ferner den folgenden Schritt umfasst:
nachdem die zweite Basisstation die Interferenz im Verarbeitungsmodus verarbeitet hat, wenn die zweite Basisstation innerhalb einer fünften Dauer die Interferenzinformationen, die von der ersten Basisstation gesendet werden, nicht empfängt, Freigeben der Schnittstelle zwischen der zweiten Basisstation und der ersten Basisstation durch die zweite Basisstation nach Ablauf der fünften Dauer.

7. Verfahren nach Anspruch 1, wobei das Verfahren ferner den folgenden Schritt umfasst:
nachdem das Zielgerät die Interferenz im Verarbeitungsmodus verarbeitet hat, Empfangen (303) von Rückmeldungsinformationen, die von der ersten Basisstation gesendet werden, durch das Zielgerät, wobei die Rückmeldungsinformationen verwendet werden, um anzuzeigen, dass ein Grad der Interferenz von der zweiten Basisstation zur ersten Basisstation kleiner oder gleich einem ersten Schwellenwert ist.

8. Verfahren nach Anspruch 1, wobei der Grad der Interferenz von der zweiten Basisstation zur ersten Basisstation durch Folgendes bestimmt wird:
ein Ergebnis der Messung eines RS, das von der ersten Basisstation gesendet wird, durch die zweite Basisstation, und/oder die Rückmeldungsinformationen, die von der ersten Basisstation gesendet werden.

9. Verfahren zur Interferenzverarbeitung, wobei das Verfahren die folgende Schritte umfasst:
Senden (101) von Interferenzinformationen durch eine erste Basisstation an ein Zielgerät, wobei die Interferenzinformationen verwendet werden, um einen Interferenzparameter für Interferenzen von einer zweiten Basisstation zur ersten Basisstation anzuzeigen, und das Zielgerät die zweite Basisstation oder ein Interferenzmanagementgerät ist;
**dadurch gekennzeichnet, dass**
wenn ein Grad der Interferenz von der zweiten Basisstation zur ersten Basisstation kleiner oder gleich einem zweiten Zielschwellenwert ist, Empfangen von zweiten Zielanzeigeinformationen durch die erste Basisstation, die von dem Zielgerät gesendet werden, wobei die zweiten Zielanzeigeinformationen verwendet werden, um die erste Basisstation anzuweisen, Senden eines Referenzsignals, RS, zu beenden;
oder
wenn ein Grad der Interferenz von der zweiten Basisstation zur ersten Basisstation kleiner oder gleich einem zweiten Zielschwellenwert ist, Empfangen von dritten Zielanzeigeinformationen, die von dem Zielgerät gesendet werden, durch die erste Basisstation, wobei die dritten Zielanzeigeinformationen verwendet werden, um einen zweiten Parameter eines Referenzsignals, RS, anzuzeigen, und der zweite Parameter eine zweite Sende-Ressource des RS aufweist.

10. Verfahren nach Anspruch 9, wobei das Zielgerät das Interferenzmanagementgerät ist; und
nach dem Senden (101) von Interferenzinformationen durch eine erste Basisstation an ein Zielgerät das Verfahren ferner die folgenden Schritte umfasst: Empfangen (103b) der ersten Zielanzeigeinformationen, die von dem Interferenzmanagementgerät gesendet werden, durch die erste Basisstation, wobei die ersten Zielanzeigeinformationen verwendet werden, um einen ersten Parameter eines Referenzsignals, RS, anzuzeigen, und der erste Parameter eine erste Sende-Ressource des RS aufweist; und Senden (103c) des RS auf der ersten Sende-Ressource durch die erste Basisstation.

11. Verfahren nach Anspruch 10, wobei vor dem Senden (101) von Interferenzinformationen durch eine erste Basisstation an ein Zielgerät das Verfahren ferner den folgenden Schritt umfasst:
Senden (201) einer ersten Zielanforderungsnachricht durch die erste Basisstation an das Interferenzmanagementgerät, wobei die erste Zielanforderungsnachricht verwendet wird, um es anzufordern, eine Schnittstelle zwischen der ersten Basisstation und der Interferenzmanagementgerät einzurichten.

12. Verfahren nach Anspruch 9, wobei das Zielgerät die zweite Basisstation ist; und
vor dem Senden (101) von Interferenzinformationen durch eine erste Basisstation an ein Zielgerät das Verfahren ferner die folgenden Schritte umfasst:
wenn die erste Basisstation gestört wird, Erhalten (702) von Zielsysteminformationen durch die erste Basisstation, wobei die Signalstärke der Zielsysteminformationen größer oder gleich einem ersten Zielschwellenwert ist und die Zielsysteminformationen eine Kennung der zweiten Basisstation aufweisen;
Senden (703) einer zweiten Zielanforderungsnachricht durch die erste Basisstation an die zweite Basisstation basierend auf der Kennung der zweiten Basisstation, wobei die zweite Zielanforderungsnachricht verwendet wird, um es anzufordern, eine Schnittstelle zwischen der ersten Basisstation und der zweiten Basisstation einzurichten; und
Einrichten (705) der Schnittstelle zwischen der ersten Basisstation und der zweiten Basisstation durch die erste Basisstation, und
wobei das Verfahren ferner den folgenden Schritt umfasst:
wenn der Grad der Interferenz von der zweiten Basisstation zur ersten Basisstation kleiner oder gleich dem zweiten Zielschwellenwert ist, Freigeben (802) der Schnittstelle zwischen der ersten Basisstation und der zweiten Basisstation durch die erste Basisstation.

13. Verfahren nach Anspruch 9, wobei das Verfahren ferner umfasst:
wenn der Grad der Interferenz von der zweiten Basisstation zur ersten Basisstation kleiner oder gleich dem zweiten Zielschwellenwert ist, Senden von Rückmeldungsinformationen durch die erste Basisstation an das Zielgerät, wobei die Rückmeldungsinformationen verwendet werden, um anzuzeigen, dass der Grad der Interferenz von der zweiten Basisstation zur ersten Basisstation kleiner oder gleich dem zweiten Zielschwellenwert ist.

14. Zielgerät, wobei das Zielgerät eine zweite Basisstation oder ein Interferenzmanagementgerät ist und das Zielgerät eine Empfangseinheit (81) und eine Bestimmungseinheit (82) aufweist;
die Empfangseinheit (81) so konfiguriert ist, dass sie Interferenzinformationen empfängt, die von einer ersten Basisstation gesendete werden, wobei die Interferenzinformationen verwendet werden, um einen Interferenzparameter für Interferenzen von der zweiten Basisstation zur ersten Basisstation anzuzeigen; und
die Bestimmungseinheit (82) so konfiguriert ist, dass sie einen Verarbeitungsmodus der Interferenz basierend auf dem Interferenzparameter bestimmt, der durch die von der Empfangseinheit empfangenen Interferenzinformationen angezeigt wird;
der Parameter eine zweite Sende-Ressource der RS aufweist.
**dadurch gekennzeichnet, dass**
das Zielgerät ferner eine Sendeeinheit (83) aufweist, wobei
die Sendeeinheit (83) so konfiguriert ist, dass sie:
wenn das Zielgerät bestimmt, dass ein Grad der Interferenz von der zweiten Basisstation zur ersten Basisstation kleiner oder gleich einem ersten Schwellenwert ist, vierte Anzeigeinformationen durch das Zielgerät an die erste Basisstation sendet (402), wobei die vierten Anzeigeinformationen verwendet werden, um die erste Basisstation anzuweisen, Senden eines Referenzsignals, RS, zu beenden; oder
wenn das Zielgerät bestimmt, dass ein Grad der Interferenz von der zweiten Basisstation zur ersten Basisstation kleiner oder gleich einem ersten Schwellenwert ist, fünfte Anzeigeinformationen durch das Zielgerät an die erste Basisstation und die zweite Basisstation sendet (502), wobei die fünften Anzeigeinformationen verwendet werden, um einen zweiten Parameter eines Referenzsignals, RS, anzuzeigen, und der zweite Parameter eine zweite Sende-Ressource des RS aufweist.

15. Basisstation, wobei die Basisstation eine erste Basisstation ist und die Basisstation eine Sendeeinheit (91) aufweist, wobei die Sendeeinheit (91) so konfiguriert ist, dass sie Interferenzinformationen an ein Zielgerät sendet, wobei die Interferenzinformationen verwendet werden, um einen Interferenzparameter für Interferenzen von einer zweiten Basisstation zur ersten Basisstation anzuzeigen, und das Zielgerät die zweite Basisstation oder ein Interferenzmanagementgerät ist;
**dadurch gekennzeichnet, dass**
die Basisstation ferner eine Empfangseinheit (92) aufweist, wobei
die Empfangseinheit (92) so konfiguriert ist, dass sie:
wenn ein Grad der Interferenz von der zweiten Basisstation zur ersten Basisstation kleiner oder gleich einem zweiten Zielschwellenwert ist, von der ersten Basisstation zweite Zielanzeigeinformationen empfängt, die von dem Zielgerät gesendet werden, wobei die zweiten Zielanzeigeinformationen verwendet werden, um die erste Basisstation anzuweisen, Senden eines Referenzsignals, RS, zu beenden;
oder
wenn der Grad der Interferenz von der zweiten Basisstation zur ersten Basisstation kleiner oder gleich dem zweiten Zielschwellenwert ist, dritte Zielanzeigeinformationen empfängt, die von dem Zielgerät gesendet werden, durch die erste Basisstation, wobei die dritten Zielanzeigeinformationen verwendet werden, um einen zweiten Parameter eines Referenzsignals, RS, anzuzeigen, und der zweite Parameter eine zweite Sende-Ressource des RS aufweist.

## Revendications

1. Procédé de traitement d'interférence, le procédé comprenant :
la réception (102), par un dispositif cible, d'informations d'interférence envoyées par une première station de base, dans lequel les informations d'interférence sont utilisées pour indiquer un paramètre d'interférence pour l'interférence d'une deuxième station de base à la première station de base, et le dispositif cible est la deuxième station de base ou un dispositif de gestion d'interférence ; et
la détermination (103), par le dispositif cible, d'un mode de traitement de l'interférence sur la base du paramètre d'interférence ;
**caractérisé en ce que**
si le dispositif cible détermine qu'un degré de l'interférence de la deuxième station de base à la première station de base est inférieur ou égal à un premier seuil, l'envoi (402), par le dispositif cible, de quatrièmes informations d'indication à la première station de base, dans lequel les quatrièmes informations d'indication sont utilisées pour ordonner à la première station de base d'arrêter l'envoi d'un signal de référence, RS ; ou
si le dispositif cible détermine qu'un degré d'interférence de la deuxième station de base à la première station de base est inférieur ou égal à un premier seuil, l'envoi (502), par le dispositif cible, de cinquièmes informations d'indication à la première station de base et à la deuxième station de base, dans lequel les cinquièmes informations d'indication sont utilisées pour indiquer un deuxième paramètre d'un signal de référence, RS, et le deuxième paramètre comprend une deuxième ressource d'envoi du RS.

2. Procédé selon la revendication 1, dans lequel le dispositif cible est le dispositif de gestion d'interférence ; et
la détermination (103), par le dispositif cible, d'un mode de traitement de l'interférence sur la base du paramètre d'interférence comprend :
l'envoi (103a), par le dispositif de gestion d'interférence, de premières informations d'indication à la première station de base et à la deuxième station de base sur la base du paramètre d'interférence, dans lequel les premières informations d'indication sont utilisées pour indiquer un premier paramètre d'un signal de référence, RS, et le premier paramètre comprend une première ressource d'envoi du RS ;
la réception (103f), par le dispositif de gestion d'interférence, d'un résultat de mesure envoyé par la deuxième station de base, dans lequel le résultat de mesure est un résultat de mesure du RS envoyé par la première station de base sur la première ressource d'envoi par la deuxième station de base ; et
la détermination (103f), par le dispositif de gestion d'interférence, du mode de traitement sur la base du résultat de mesure.

3. Procédé selon la revendication 2, dans lequel le mode de traitement comprend au moins un premier mode et un deuxième mode ;
le premier mode est comme suit : le dispositif de gestion d'interférence envoie de deuxièmes informations d'indication à la première station de base, dans lequel les deuxièmes informations d'indication sont utilisées pour ordonner à la première station de base d'ajuster au moins parmi des informations à propos d'un canal d'accès, une ressource d'envoi de la première station de base et un niveau d'un schéma de modulation et de codage, MCS ; et
le deuxième mode est comme suit : le dispositif de gestion d'interférence envoie de troisièmes informations d'indication à la deuxième station de base, dans lequel les troisièmes informations d'indication sont utilisées pour indiquer au moins un parmi ce qui suit : la deuxième station de base réduit la puissance de transmission de la deuxième station de base, la deuxième station de base effectue une réduction de liaison descendante, la deuxième station de base augmente la puissance de transmission après la réduction de la puissance de transmission pendant une première durée, et la deuxième station de base annule la réduction de liaison descendante après la réduction de liaison descendante pendant une deuxième durée.

4. Procédé selon la revendication 2 ou 3, dans lequel, avant la réception (102), par un dispositif cible, d'informations d'interférence envoyées par une première station de base, le procédé comprend en outre :
la réception (203), par le dispositif de gestion d'interférence, d'un premier message de demande envoyé par la première station de base, et la réception d'un deuxième message de demande envoyé par la deuxième station de base, dans lequel le premier message de demande est utilisé pour demander l'établissement d'une interface entre la première station de base et le dispositif de gestion d'interférence, et le deuxième message de demande est utilisé pour demander l'établissement d'une interface entre la deuxième station de base et le dispositif de gestion d'interférence ; et
l'établissement (204), par le dispositif de gestion d'interférence, de l'interface entre le dispositif de gestion d'interférence et la première station de base sur la base du premier message de demande, et l'établissement de l'interface entre le dispositif de gestion d'interférence et la deuxième station de base sur la base du deuxième message de demande.

5. Procédé selon la revendication 1, dans lequel le dispositif cible est la deuxième station de base ; et le mode de traitement comprend au moins un parmi ce qui suit : la deuxième station de base réduit la puissance de transmission de la deuxième station de base, la deuxième station de base effectue une réduction de liaison descendante, la deuxième station de base augmente la puissance de transmission après la réduction de la puissance de transmission pendant une troisième durée, et la deuxième station de base annule la réduction de liaison descendante après la réduction de liaison descendante pendant une quatrième durée.

6. Procédé selon la revendication 5, dans lequel, avant la réception (102), par un dispositif cible, d'informations d'interférence envoyées par une première station de base, le procédé comprend en outre :
l'envoi (701), par la deuxième station de base, d'informations système, dans lequel les informations système sont utilisées pour indiquer un identifiant de la deuxième station de base, l'identifiant de la deuxième station de base est utilisé par la première station de base pour envoyer un troisième message de demande à la deuxième station de base, et le troisième message de demande est utilisé pour demander l'établissement d'une interface entre la première station de base et la deuxième station de base ; la réception (704), par la deuxième station de base, du troisième message de demande envoyé par la première station de base ; et l'établissement (705), par la deuxième station de base, de l'interface entre la deuxième station de base et la première station de base sur la base du troisième message de demande ; et
dans lequel le procédé comprend en outre :
après que la deuxième station de base traite l'interférence dans le mode de traitement, si la deuxième station de base ne parvient pas, au sein d'une cinquième durée, la réception des informations d'interférence envoyées par la première station de base, libérer, par la deuxième station de base, l'interface entre la deuxième station de base et la première station de base après la cinquième durée.

7. Procédé selon la revendication 1, dans lequel le procédé comprend en outre :
après que le dispositif cible traite l'interférence dans le mode de traitement, la réception (303), par le dispositif cible, d'informations de rétroaction envoyées par la première station de base, dans lequel les informations de rétroaction sont utilisées pour indiquer qu'un degré d'interférence de la deuxième station de base à la première station de base est inférieur ou égal à un premier seuil.

8. Procédé selon la revendication 1, dans lequel le degré de l'interférence de la deuxième station de base à la première station de base est déterminé par au moins un de ce qui suit :
un résultat de la mesure d'un RS envoyé par la première station de base par la deuxième station de base, et des informations de rétroaction envoyées par la première station de base.

9. Procédé de traitement d'interférence, le procédé comprenant :
l'envoi (101), par une première station de base, d'informations d'interférence à un dispositif cible, dans lequel les informations d'interférence sont utilisées pour indiquer un paramètre d'interférence pour l'interférence d'une deuxième station de base à la première station de base, et le dispositif cible est la deuxième station de base ou un dispositif de gestion d'interférence ;
**caractérisé en ce que**
si un degré de l'interférence entre la deuxième station de base et la première station de base est inférieur ou égal à un deuxième seuil cible, la réception, par la première station de base, de deuxièmes informations d'indication cibles envoyées par le dispositif cible, dans lequel les deuxièmes informations d'indication cibles sont utilisées pour ordonner à la première station de base d'arrêter l'envoi d'un signal de référence, RS ; ou
si un degré de l'interférence de la deuxième station de base à la première station de base est inférieur ou égal à un deuxième seuil cible, la réception, par la première station de base, de troisièmes informations d'indication cibles envoyées par le dispositif cible, dans lequel les troisièmes informations d'indication cibles sont utilisées pour indiquer un deuxième paramètre d'un signal de référence, RS, et le deuxième paramètre comprend une deuxième ressource d'envoi du RS.

10. Procédé selon la revendication 9, dans lequel le dispositif cible est le dispositif de gestion d'interférence ; et
après l'envoi (101), par une première station de base, d'informations d'interférence à un dispositif cible, le procédé comprend en outre : la réception (103b), par la première station de base, de premières informations d'indication cibles envoyées par le dispositif de gestion d'interférence, dans lequel les premières informations d'indication cibles sont utilisées pour indiquer un premier paramètre d'un signal de référence, RS, et le premier paramètre comprend une première ressource d'envoi du RS ; et envoyer (103c), par la première station de base, le RS sur la première ressource d'envoi.

11. Procédé selon la revendication 10, dans lequel, avant l'envoi (101), par une première station de base, d'informations d'interférence à un dispositif cible, le procédé comprend en outre :
l'envoi (201), par la première station de base, d'un premier message de demande cible au dispositif de gestion d'interférence, dans lequel le premier message de demande cible est utilisé pour demander l'établissement d'une interface entre la première station de base et le dispositif de gestion d'interférence.

12. Procédé selon la revendication 9, dans lequel le dispositif cible est la deuxième station de base ; et
avant l'envoi (101), par une première station de base, d'informations d'interférence à un dispositif cible, le procédé comprend en outre :
s'il y a interférence de la première station de base, l'obtention (702), par la première station de base, d'informations système cibles, dans lequel la force de signal des informations système cibles est supérieure ou égale à un premier seuil cible, et les informations système cibles comprennent un identifiant de la deuxième station de base ;
l'envoi (703), par la première station de base, d'un deuxième message de demande cible à la deuxième station de base sur la base de l'identifiant de la deuxième station de base, dans lequel le deuxième message de demande cible est utilisé pour demander l'établissement d'une interface entre la première station de base et la deuxième station de base ; et
l'établissement (705), par la première station de base, de l'interface entre la première station de base et la deuxième station de base, et
dans lequel le procédé comprend en outre :
si le degré d'interférence de la deuxième station de base à la première station de base est inférieur ou égal au deuxième seuil cible, la libération (802), par la première station de base, de l'interface entre la première station de base et la deuxième station de base.

13. Procédé selon la revendication 9, dans lequel le procédé comprend en outre :
si le degré d'interférence de la deuxième station de base à la première station de base est inférieur ou égal au deuxième seuil cible, l'envoi, par la première station de base, d'informations de rétroaction au dispositif cible, dans lequel les informations de rétroaction sont utilisées pour indiquer que le degré d'interférence de la deuxième station de base à la première station de base est inférieur ou égal au deuxième seuil cible.

14. Dispositif cible, dans lequel le dispositif cible est une deuxième station de base ou un dispositif de gestion d'interférence, et le dispositif cible comprend une unité de réception (81) et une unité de détermination (82) ;
l'unité de réception (81) est configurée pour recevoir des informations d'interférence envoyées par une première station de base, dans lequel les informations d'interférence sont utilisées pour indiquer un paramètre d'interférence pour l'interférence de la deuxième station de base à la première station de base ; et
l'unité de détermination (82) est configurée pour déterminer un mode de traitement de l'interférence sur la base du paramètre d'interférence indiqué par les informations d'interférence reçues par l'unité de réception ;
**caractérisé en ce que**
le dispositif cible comprend en outre une unité d'envoi (83), dans lequel
l'unité d'envoi (83) est configurée pour :
si le dispositif cible détermine qu'un degré de l'interférence de la deuxième station de base à la première station de base est inférieur ou égal à un premier seuil, envoyer (402), par le dispositif cible, de quatrièmes informations d'indication à la première station de base, dans lequel les quatrièmes informations d'indication sont utilisées pour ordonner à la première station de base d'arrêter l'envoi d'un signal de référence, RS ; ou
si le dispositif cible détermine qu'un degré d'interférence de la deuxième station de base à la première station de base est inférieur ou égal à un premier seuil, envoyer (502), par le dispositif cible, de cinquièmes informations d'indication à la première station de base et à la deuxième station de base, dans lequel les cinquièmes informations d'indication sont utilisées pour indiquer un deuxième paramètre d'un signal de référence, RS, et le deuxième paramètre comprend une deuxième ressource d'envoi du RS.

15. Station de base, la station de base est une première station de base, et la station de base comprend une unité d'envoi (91), dans laquelle l'unité d'envoi (91) est configurée pour envoyer, par une première station de base, des informations d'interférence à un dispositif cible, dans lequel les informations d'interférence sont utilisées pour indiquer un paramètre d'interférence pour l'interférence d'une deuxième station de base à la première station de base, et le dispositif cible est la deuxième station de base ou un dispositif de gestion d'interférence ;
**caractérisée en ce que**
la station de base comprend en outre une unité de réception (92) dans laquelle,
l'unité de réception (92) est configurée pour :
si un degré de l'interférence entre la deuxième station de base et la première station de base est inférieur ou égal à un deuxième seuil cible, recevoir, par la première station de base, de deuxièmes informations d'indication cibles envoyées par le dispositif cible, dans lequel les deuxièmes informations d'indication cibles sont utilisées pour ordonner à la première station de base d'arrêter l'envoi d'un signal de référence, RS ; ou
si le degré de l'interférence de la deuxième station de base à la première station de base est inférieur ou égal au deuxième seuil cible, recevoir, par la première station de base, de troisièmes informations d'indication cibles envoyées par le dispositif cible, dans lequel les troisièmes informations d'indication cibles sont utilisées pour indiquer un deuxième paramètre d'un signal de référence, RS, et le deuxième paramètre comprend une deuxième ressource d'envoi du RS.
